# EUROPEAN PATENT APPLICATION

(11) **EP 3 806 445 A1**
(43) Date of publication of application: **14.04.2021**
(21) Application number: 19810675.9
(22) Date of filing: 21.05.2019
(51) Int. Cl.: H04N 5/232

(54) **METHOD AND DEVICE FOR REMOVING VIDEO JITTER**

(30) Priority: 31.05.2018 CN 201810554266
(71) Applicant: ALIBABA GROUP HOLDING LIMITED, George Town, Grand Cayman (KY)
(72) Inventor: CHEN, Ruizhi, Hangzhou, Zhejiang 311121 (CN)
(74) Representative: Finnegan Europe LLP
(86) International application number: PCT/CN2019/087693
(87) International publication number: WO 2019/228219

(57) **Abstract**

The present application provides a method and apparatus for removing video jitter. The method includes: determining position information of feature point pairs in each pair of raw images according to position information of feature point pairs in each pair of compressed images, wherein one feature point pair is composed of two corresponding feature points on two consecutive images in each pair of images, and the raw images are uncompressed images; determining position change information of the subsequent image relative to the preceding image in each pair of raw images according to the position information of the feature point pairs in each pair of raw images; acquiring deformation information corresponding to the preceding image in the m-th pair of raw images according to the position change information of the subsequent image relative to the preceding image in n pairs of raw images; and deforming the preceding image in the m-th pair of raw images according to the deformation information corresponding to the preceding image in the m-th pair of raw images to obtain the preceding image in the m-th pair of raw images with jitter removed. Video jitter is removed in real time through the above steps.

## Description

The present application claims the priority of Chinese patent application No. 201810554266.9 filed on May 31, 2018 and entitled "METHOD AND APPARATUS FOR REMOVING VIDEO JITTER", the entire content of which is incorporated into the present application by reference.

### Technical Field

The present application relates to the field of video processing, and particularly, to a method and apparatus for removing video jitter. The present application also relates to an electronic device and a computer-readable storage medium.

### Background

A video of a period of time is formed by many frames of images that change rapidly and continuously. When taking a video, because the relative movement between a video capture device and a scene will cause a relatively large displacement between the taken images that change rapidly, the video will be jittery.

A video jitter removing solution in the prior art is a non-real-time jitter removing solution, which cannot meet the real-time processing requirements of live videos and short videos.

### Summary of the Invention

The present application provides a method for removing video jitter, which aims to solve the technical problem that jitter cannot be removed in real time in the prior art.

The present application proposes a method for removing video jitter. The method includes: determining position information of feature point pairs in each pair of raw images according to position information of feature point pairs in each pair of compressed images, wherein one feature point pair is composed of two corresponding feature points on two consecutive images in each pair of images, and the raw images are uncompressed images; determining position change information of the subsequent image relative to the preceding image in each pair of raw images according to the position information of the feature point pairs in each pair of raw images; acquiring deformation information corresponding to the preceding image in the m-th pair of raw images according to the position change information of the subsequent image relative to the preceding image in n pairs of raw images, where n and m are positive integers, and m is not greater than n; and deforming the preceding image in the m-th pair of raw images according to the deformation information corresponding to the preceding image in the m-th pair of raw images to obtain the preceding image in the m-th pair of raw images with jitter removed.

Optionally, the method further includes: storing the raw images into a first queue; and storing the position change information of the subsequent image relative to the preceding image in each pair of raw images into a second queue.

Optionally, the step of acquiring the deformation information corresponding to the preceding image in the m-th pair of raw images according to the position change information of the subsequent image relative to the preceding image in the n pairs of raw images includes: acquiring the deformation information corresponding to the preceding image in the m-th pair of raw images according to the position change information of the subsequent image relative to the preceding image in the n pairs of raw images when the images stored in the first queue reach a first number and when the position change information stored in the second queue reaches the first number.

Optionally, after the step of acquiring the deformation information corresponding to the preceding image in the first pair of raw images, the method further includes: taking out the image at the head of the first queue before storing images into the first queue again; and taking out the position change information at the head of the second queue before storing position change information into the second queue again.

Optionally, the method further includes: compressing each pair of raw images by a first multiple; determining feature points on each image in each pair of compressed images; determining two corresponding feature points on the two consecutive images in each pair of compressed images as a feature point pair; and determining position information of the feature point pairs in each pair of compressed images.

Optionally, the step of determining the position information of the feature point pairs in each pair of raw images according to the position information of the feature point pairs in each pair of compressed images includes: expanding the position information of the feature point pairs in each pair of compressed images by the first multiple to obtain the position information of the feature point pairs in each pair of raw images.

Optionally, the step of determining the position information of the feature point pairs in each pair of raw images according to the position information of the feature point pairs in each pair of compressed images includes: partitioning the two consecutive images in each pair of raw images; determining position change information of a corresponding partition of the subsequent image relative to a corresponding partition of the preceding image in each pair of raw images according to the position information of the feature point pairs in the corresponding partition of each pair of raw images; and determining the position change information of the subsequent image relative to the preceding image in each pair of raw images according to the position change information of the corresponding partition of the subsequent image relative to the corresponding partition of the preceding image in each pair of raw images.

Optionally, the position information is coordinates, the position change information is a transformation matrix, and the deformation information is a deformation matrix.

Optionally, the step of deforming the preceding image in the m-th pair of raw images according to the deformation information corresponding to the preceding image in the m-th pair of raw images includes: deforming the partition of the preceding image in the m-th pair of raw images according to the deformation matrix corresponding to the preceding image in the m-th pair of raw images; and cutting an edge of the preceding image in the m-th pair of raw images after deformation.

The present application proposes an apparatus for removing video jitter. The apparatus includes: a position information acquisition first unit, configured to determine position information of feature point pairs in each pair of raw images according to position information of feature point pairs in each pair of compressed images, wherein one feature point pair is composed of two corresponding feature points on two consecutive images in each pair of images, and the raw images are uncompressed images; a position change information acquisition unit, configured to determine position change information of the subsequent image relative to the preceding image in each pair of raw images according to the position information of the feature point pairs in each pair of raw images; a deformation information acquisition unit, configured to acquire deformation information corresponding to the preceding image in the m-th pair of raw images according to the position change information of the subsequent image relative to the preceding image in n pairs of raw images, where n and m are positive integers, and m is not greater than n; and a deformation processing unit, configured to deform the preceding image in the m-th pair of raw images according to the deformation information corresponding to the preceding image in the m-th pair of raw images to obtain the preceding image in the m-th pair of raw images with jitter removed.

Optionally, the apparatus further includes: an image storage unit, configured to store the raw images into a first queue; and a position change information storage unit, configured to store the position change information of the subsequent image relative to the preceding image in each pair of raw images into a second queue.

Optionally, the apparatus further includes: a compression unit, configured to compress each pair of raw images by a first multiple; a feature point determination unit, configured to determine feature points on each image in each pair of compressed images; a feature point pair determination unit, configured to determine two corresponding feature points on the two consecutive images in each pair of compressed images as a feature point pair; and a position information acquisition second unit, configured to determine position information of the feature point pairs in each pair of compressed images.

Optionally, the position change information acquisition unit includes: an image partitioning subunit, configured to partition consecutive images in each pair of raw images; a position change information acquisition first subunit, configured to determine position change information of a corresponding partition of the subsequent image relative to a corresponding partition of the preceding image in each pair of raw images according to the position information of the feature point pairs in the corresponding partition of each pair of raw images; and a position change information acquisition second subunit, configured to determine the position change information of the subsequent image relative to the preceding image in each pair of raw images according to the position change information of the corresponding partition of the subsequent image relative to the corresponding partition of the preceding image in each pair of raw images.

Optionally, the deformation processing unit includes: a deformation subunit, configured to deform the partition of the preceding image in the m-th pair of raw images according to a deformation matrix corresponding to the preceding image in the m-th pair of raw images; and a cutting subunit, configured to cut an edge of the preceding image in the m-th pair of raw images after deformation.

The present application also proposes an electronic device. The electronic device includes: a processor; and a memory for storing a program for removing video jitter, and when the program is read and executed by the processor, the following operations are performed: determining position information of feature point pairs in each pair of raw images according to position information of feature point pairs in each pair of compressed images, wherein one feature point pair is composed of two corresponding feature points on two consecutive images in each pair of images, and the raw images are uncompressed images; determining position change information of the subsequent image relative to the preceding image in each pair of raw images according to the position information of the feature point pairs in each pair of raw images; acquiring deformation information corresponding to the preceding image in the m-th pair of raw images according to the position change information of the subsequent image relative to the preceding image in n pairs of raw images, where n and m are positive integers, and m is not greater than n; and deforming the preceding image in the m-th pair of raw images according to the deformation information corresponding to the preceding image in the m-th pair of raw images to obtain the preceding image in the m-th pair of raw images with jitter removed.

The present application also proposes a computer-readable storage medium on which a program for removing video jitter is stored. When the program is read and executed by a processor, the following operations are performed: determining position information of feature point pairs in each pair of raw images according to position information of feature point pairs in each pair of compressed images, wherein one feature point pair is composed of two corresponding feature points on two consecutive images in each pair of images, and the raw images are uncompressed images; determining position change information of the subsequent image relative to the preceding image in each pair of raw images according to the position information of the feature point pairs in each pair of raw images; acquiring deformation information corresponding to the preceding image in the m-th pair of raw images according to the position change information of the subsequent image relative to the preceding image in n pairs of raw images, where n and m are positive integers, and m is not greater than n; and deforming the preceding image in the m-th pair of raw images according to the deformation information corresponding to the preceding image in the m-th pair of raw images to obtain the preceding image in the m-th pair of raw images with jitter removed.

The technical solution for removing video jitter proposed in the present application first determines the position information of the feature point pairs in each pair of raw images according to the position information of the feature point pairs in each pair of compressed images. The raw images will become smaller after compression, and the electronic device will perform various processing relatively quickly, so this technical means can acquire the position information of each feature point pair on the image in real time for each image captured. After the position information of the feature point pairs on each pair of images is acquired in real time, the position change information of the subsequent image relative to the preceding image in each pair of raw images is determined in real time correspondingly according to the position information of the feature point pairs in each pair of raw images. After the position change information of the subsequent image relative to the preceding image in the n pairs of raw images is acquired, deformation information corresponding to the preceding image in the m-th pair of raw images is acquired, and the preceding image is deformed according to the deformation information corresponding to the preceding image in the m-th pair of raw images to obtain the preceding image with jitter removed. By analogy, other images after the preceding image are sequentially deformed and jitter-removed, thereby achieving real-time jitter removing. At the same time, this technical solution does not rely on other auxiliary devices while removing jitter in real time, and has greater convenience, so that the technical problem that real-time jitter removing cannot be achieved or external gyros are needed for real-time jitter removing in the prior art is solved.

### Brief Description of the Drawings

FIG. 1 is a flowchart of an embodiment of a method for removing video jitter provided by the present application;
FIG. 2 is a schematic diagram of feature points involved in the method for removing video jitter provided by the present application;
FIG. 3 is a schematic diagram of a partition transformation matrix involved in the method for removing video jitter provided by the present application;
FIG. 4 is a schematic diagram of a corresponding relationship between each image and a corresponding partition transformation matrix involved in the method for removing video jitter provided by the present application;
FIG. 5 is a schematic diagram of each matrix applied when acquiring a deformation matrix involved in the method for removing video jitter provided by the present application;
FIG. 6 is a schematic diagram of image deformation processing involved in the method for removing video jitter provided by the present application; and
FIG. 7 is a schematic diagram of an embodiment of an apparatus for removing video jitter provided by the present application.

### Detailed Description

In the following description, many specific details are explained in order to fully understand the present application. However, the present application can be implemented in many other ways different from those described herein, and those skilled in the art can make similar deductive reasoning without violating the connotation of the present application. Therefore, the present application is not limited by the specific implementations disclosed below.

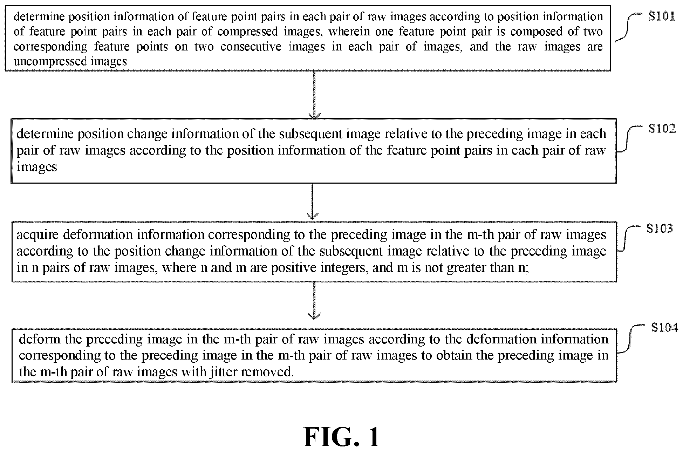

The present application provides a method for removing video jitter, and FIG. 1 is a flowchart of an embodiment of the method for removing video jitter provided by the present application. The following describes the technical solution of the method for removing video jitter provided by the present application in conjunction with the flow of an embodiment of the method for removing video jitter shown in FIG. 1.

A video of a period of time is formed by many frames of images that change rapidly and continuously. When taking a video, because the relative movement between a video capture device and a scene will cause a relatively large displacement between the taken images that change rapidly, the video will be "jittery". The present application aims to remove a jitter problem of a video in real time.

The method for removing video jitter shown in FIG. 1 includes:
In step S101, position information of feature point pairs in each pair of raw images is determined according to position information of feature point pairs in each pair of compressed images, wherein one feature point pair is composed of two corresponding feature points on two consecutive images in each pair of images.

Step S101 is to determine the position information of the feature point pairs in each pair of uncompressed raw images through the position information of the feature point pairs in each pair of compressed images. Therefore, before step S101, step S100 may be included: the position information of the feature point pairs in each pair of compressed images is acquired.

Step S 100 may specifically include the following steps:
In step S100-1, the raw images are stored into a first queue.

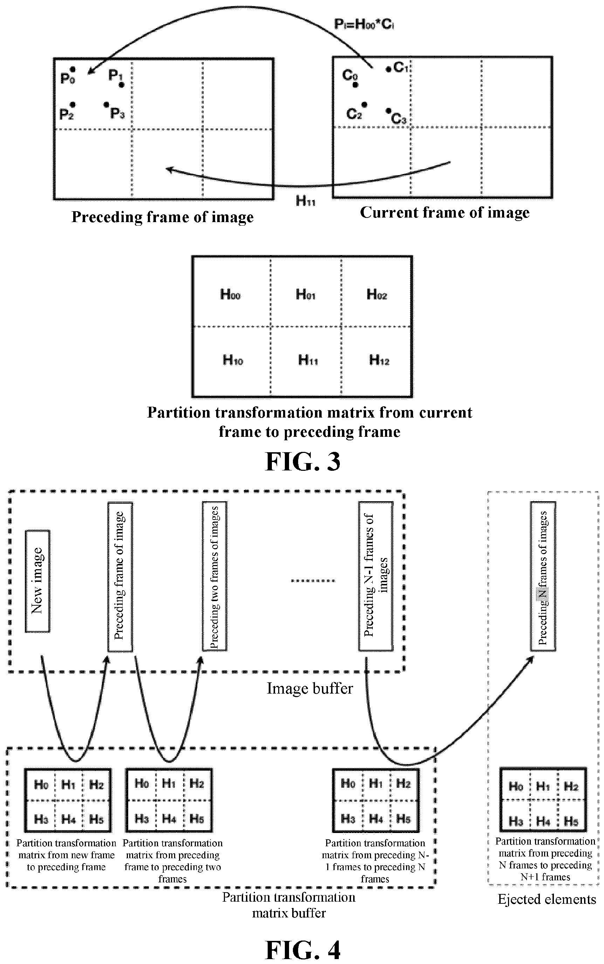

When multiple frames of images are taken within a period of time using the video taking device, the multiple frames of images are arranged in the first queue in sequence, and every two adjacent frames of images are a pair of images, where the first one is a preceding image, and the last one is a subsequent image. The queue can be specifically implemented in an image buffer. The image buffer refers to a memory, in a computer system, dedicated to storing images being synthesized or displayed. FIG. 4 illustrates a schematic diagram of the image buffer.

In step S100-2, each pair of raw images is compressed by a first multiple.

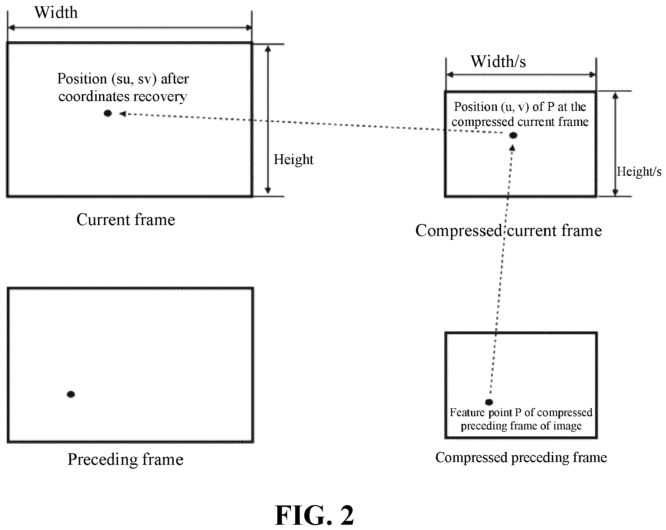

In the process of quickly removing the jitter of the multiple frames of images in a video of a period of time, the raw images may be compressed by the first multiple, and the multiple may be a preset value. Compared with the uncompressed image, the compressed image is smaller by the first multiple, and an electronic device will process faster, so that every time a new image is captured and compressed, the subsequent steps can be quickly performed, such as: determining feature points on the new image and position information of each feature point. See FIG. 2, the two images on the right in FIG. 2 are the compressed preceding frame of image and the compressed current frame of image. The width and height of the preceding and current frames of images before compression on the left will be the first multiple less than the width and height of the current frame of image and the preceding frame of image after compression on the right.

In step S100-3, feature points on each of consecutive images in each pair of compressed images are determined.

The feature points refer to a series of pixels on the images that can characterize the contours, appearance and other features of the scene taken. Usually, this series of points will have relatively obvious features, for example, the gray value is relatively large, that is, the image at the point is relatively dark, and the point can be determined as a feature point. For example, if a point P on the compressed current frame in FIG. 2 can characterize the features of the scene taken, then the point P can be used as a feature point on the compressed current frame of image.

In step S100-4, two corresponding feature points on each of consecutive images in each pair of compressed images are determined as a feature point pair.

Each of the consecutive images has its own series of several feature points, where a certain feature point on the preceding image may have a corresponding feature point on the subsequent image. For example, if the two corresponding feature points both characterize a certain point of the taken scene on the image, the two corresponding feature points constitute a feature point pair. As shown in FIG. 2, the feature point P on the compressed current frame and the feature point P on the compressed preceding frame of image both characterize the same feature point of the scene taken, then these two corresponding feature points constitute a feature point pair.

In step S100-5, the position information of the feature point pairs in each pair of compressed images is determined.

The position information of the feature point pairs refers to the relative positions of the two corresponding feature point pairs in the corresponding images, and the position information may be coordinates of the feature points on the corresponding images. For example, the position coordinates of the feature point P on the compressed current frame in FIG. 2 are (u, v). In addition, the corresponding feature point P on the compressed preceding frame of image also has coordinate values. The position information of the two feature points on the respective images is the position information of one feature point pair on the pair of images. There are multiple feature point pairs on the two compressed images adjacent to each other, so the position information of the multiple feature point pairs on the images that are adjacent to each other can be acquired.

After step S100 is performed, that is, after the step of acquiring the position information of the feature point pairs in each pair of compressed images, step S101 may be performed: the position information of the feature point pairs in each pair of raw images is determined according to the position information of the feature point pairs in each pair of compressed images.

Since the compressed current frame of image and the preceding frame of image are compressed by the first multiple of the uncompressed raw images, after the position information of the feature point pairs in each pair of compressed images is acquired, that is, after the position information of the feature points on each image in each pair of compressed images is obtained, as long as the position information of the feature points on each image in each pair of compressed images is expanded by the first multiple, the position information of the feature points on each image in each pair of uncompressed images can be obtained, which is the position information of the feature point pairs formed by the feature points in each pair of images. For example, in FIG. 2, the coordinates (u, v) of the feature point P on the current compressed image are expanded by the first multiple, and the coordinates (su, sv) of the feature point P on the uncompressed current frame of image can be obtained. In the same way, the coordinates of the feature point P on the compressed preceding frame of image are expanded by the first multiple, and the coordinates of the feature point P on the uncompressed preceding frame of image can also be obtained. The two corresponding feature points P in the compressed current frame and the compressed preceding frame constitute a feature point pair P in the compressed current and preceding frames of images. The two corresponding feature points P in the uncompressed current frame and the uncompressed preceding frame constitute a feature point pair P in the uncompressed current and preceding frames.

In step S102, position change information of the subsequent image relative to the preceding image in each pair of raw images is determined according to the position information of the feature point pairs in each pair of raw images.

In the present application, step S102 may divide each pair of raw images into multiple partitions. After the position change information from a certain partition on the current frame of image to a corresponding partition on the preceding frame of image is determined, the position change information of the divided several corresponding partitions is combined to the position change information from the current frame of image to the preceding frame of image in each pair of images.

Specifically, step S102 may include the following steps:
In step S102-1, each of consecutive images in each pair of raw images is partitioned; and as shown in the example of FIG. 3, both the current frame of image and the preceding frame of image are divided into six partitions. Among them, four feature points are illustrated in the partition at the upper left corner of the current frame of image: C₀, *C*₁, *C*₂, *C*₃, and four corresponding feature points *P*₀, *P*₁, *P*₂, *P*₃ are also illustrated on the preceding frame of image.
In step S102-2, the position change information from the corresponding partition of the subsequent image to the corresponding partition of the preceding image in each pair of raw images is determined according to the position information of each feature point pair in the corresponding partition of each pair of raw images.

Due to the relative movement of the two consecutive images, the position information of the feature points on the subsequent image is different from the position information of the corresponding feature points on the preceding image, and position information difference between the position of the feature points on the subsequent image and that of the corresponding feature points on the preceding image is the position change information from the feature points on the subsequent image to the corresponding feature points on the preceding image. The difference between the position information of each feature point of the corresponding partition on the subsequent image and the position information of each corresponding feature point of the corresponding partition on the preceding image is the position change information from the corresponding partition of the subsequent raw image to the corresponding partition of the preceding raw image. For example, the example of the preceding frame of image in FIG. 3 has 4 feature points *P*₀*, P*₁, *P*₂, *P*₃, and these 4 feature points respectively correspond to the corresponding 4 feature points *C*₀, *C*₁, *C*₂*, C*₃ on the current frame of image. As mentioned earlier, the 4 feature points on the preceding frame of image and the 4 feature points on the current frame of image all characterize the same feature of the scene taken, so the 4 points on the two consecutive images correspond to each other to constitute 4 feature point pairs. In the case where there are 4 feature points in the partition example at the upper left corner of the preceding frame of image, the position information of these 4 feature points *P*₀*, P*₁ , *P₂*, *P*₃ constitutes a matrix corresponding to the partition at the upper left corner of the preceding frame of image. Similarly, the position information of 4 points *C*₀, *C*₁, *C*₂, *C*₃ on the current frame of image constitutes the corresponding matrix of the partition at the upper left corner of the current frame of image. There is a transformation matrix in transformation from the matrix corresponding to the partition at the upper left corner of the current frame to the matrix corresponding to the partition at the upper left corner of the preceding frame of image, and this transformation matrix is the position change information or the position change matrix from the partition at the upper left corner of the current frame of image to the partition at the upper left corner of the preceding frame of image. In FIG. 3, the position change information or the position change matrix *H*₀₀ from the partition at the upper left corner in the current frame of image to the partition at the upper left corner in the preceding frame of image is illustrated. That is, the position information or matrix corresponding to each feature point in the upper left corner of the current frame of image is multiplied by the position change matrix *H*₀₀ to calculate the position information corresponding to each feature point in the upper left corner of the preceding frame of image. Of course, the feature point *C*₁ in the partition at the upper left corner of the current frame of image is multiplied by a value at the corresponding position in *H*₀₀ to also obtain the position information of the corresponding feature point ^{P1} in the partition at the upper left corner of the preceding frame of image. Similarly, the position change information from the partition at the lower left corner of the current frame of image to the partition at the lower left corner of the preceding frame of image may be expressed as *H*₁₀ . The position change information between the other four corresponding partitions may be expressed as *H*₀₁, *H*₀₂, *H*₁₁, *H*_{12 in turn.}

In step S 102-3, according to the position change information of the corresponding partition of the subsequent raw image relative to the corresponding partition of the preceding raw image in each pair of raw images, the position change information of the subsequent image relative to the preceding image in each pair of raw images is determined.

Based on step S 102-2, the position change information *H*₀₀, *H*₀₁, *H* ₀₂, *H*₁₀, *H*₁₁, *H*₁₂ from each partition of the current frame of image to each corresponding partition of the preceding frame of image has been obtained, and the position change information corresponding to each partition can be combined to characterize the position change information of the current frame of image to the preceding frame of image, and the partition transformation matrix from the current frame to the preceding frame as illustrated in FIG. 3 is the position change information from the current frame of image to the preceding frame of image.

In step S102-4, the position change information of the subsequent image relative to the preceding image in each pair of raw images is stored into a second queue.

After the position change information from the current frame of image to the preceding frame of image is obtained based on step S102-3, the position change information between the pair of images may be stored into a queue which may be named the second queue. The queue may be specifically stored by a partition transformation matrix buffer. The partition transformation matrix buffer may be a memory, in a computer system, dedicated to storing transformation matrices. FIG. 4 illustrates a schematic diagram of the partition transformation matrix buffer.

In step S103, deformation information corresponding to the preceding image in the m-th pair of raw images is acquired according to the position change information of the subsequent image relative to the preceding image in the n pairs of raw images, where n and m are positive integers, and m is not greater than n.

The following example illustrates how to implement step S103, that is, taking m=1 as an example, how to acquire the deformation information corresponding to the preceding image in the first pair of raw images. To acquire the deformation information corresponding to the preceding image in the first pair of raw images, it is necessary to use the position information stored in an original path buffer, an optimized path temporary register and an optimized path buffer in a deformation matrix iterative optimizer for processing, and the role of each buffer in this step is introduced below.

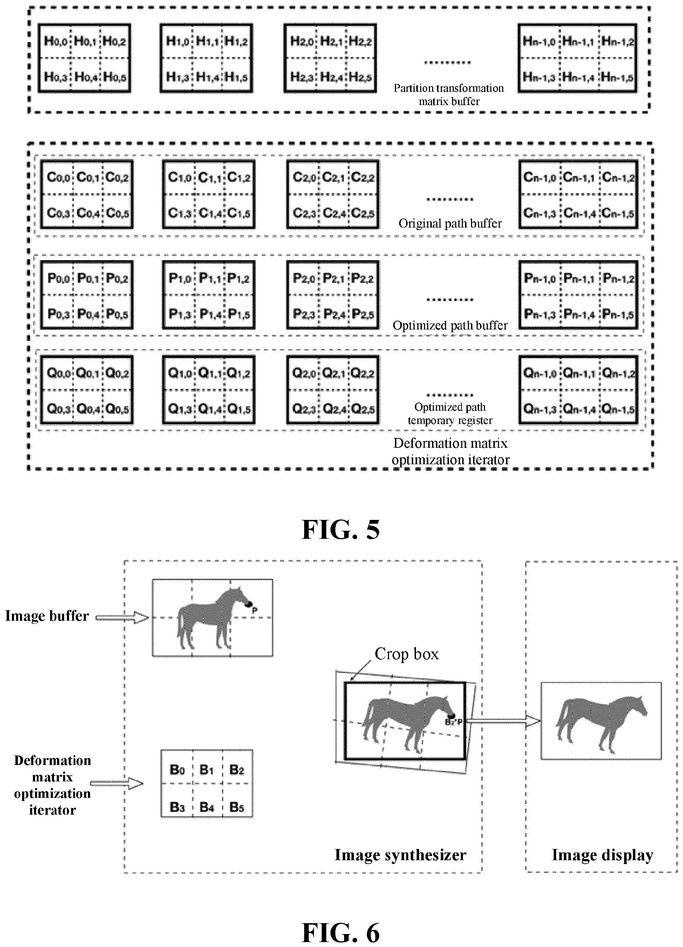

As shown in FIG. 5, what is stored in the partition transformation matrix buffer in FIG. 5 is the position change information of the subsequent image relative to the preceding image. The partition transformation matrix buffer can store the position change information between a certain number of images. The position change information between the certain number of images is stored in the order of generation, and the position change information between the images generated later is arranged at the end of the partition transformation matrix buffer. The partition transformation matrix buffer illustrated in FIG. 5 may store the corresponding position change information between n pairs of images, that is, it stores n position change information or position change matrices. The rightmost set of partition transformation matrices in FIG. 5 represents the position change matrices between the first image and the second image first collected by an image collector, and so on. The leftmost set of partition transformation matrices in FIG. 5 represents the position change matrices between the last image and the preceding image.

The partition transformation matrix buffer shown in FIG. 5 has a fixed length, that is, it can store n position change information at most. Correspondingly, the image buffer in FIG. 4 also has a fixed length, and the length of the image buffer is the same as the length of the partition transformation matrix buffer, that is, the image buffer can store n images at most. When the partition transformation matrix buffer is full of n position change information or position change matrices, and when the image buffer is full of n images, the following step is triggered: acquiring the deformation information corresponding to the preceding image in the first pair of raw images. For example, the first queue in the image buffer illustrated in FIG. 4 can store n images, the first image acquired first and the second image acquired first are the first pair of images, and the sequence numbers of the first pair of images in the image buffer are n-1 and n-2. The deformation information corresponding to the preceding image in the first pair of raw images is acquired, that is, the deformation information corresponding to the frame of image with the sequence number of n-1 in the image buffer is acquired. After the step of acquiring the deformation information corresponding to the preceding image in the first pair of raw images, the following steps may be further performed: before images are stored in the first queue again, the image at the head of the first queue is taken out; and before position change information is stored in the second queue again, the position change information at the head of the second queue is taken out. After the image at the head of the queue is taken out of the image buffer and the position change information at the head of the queue is taken out of the partition transformation matrix buffer, positions may be freed for the storage of new images and the storage of new position change information.

In FIG. 5, *H*_{*n-*1,0} represents the first partition position change information in the position change information at the head of the second queue storing the position change information, *H*_{*n-*1,1} represents the second partition position change information, and so on, *H*_{*n-*1,5} represents the sixth partition position change information. Similarly, *H*_{0,0} represents the first partition position change information in the position change information at the tail of the second queue storing the position change information, *H*_{0,1} represents the second partition position change information, and so on, *H*_{0,5} represents the sixth partition position change information.

In FIG. 5, the original path buffer stores a product of certain partition position change information in the newly stored position change information in the second queue and the corresponding partition position change information in the previously stored position change information, that is *C_{i,j}* =H_{0,*j*} ∗ H_{1,*j*} ∗ ...... H_{*i*-1,*j*}∗ H_{i,*j*} , where C*_{i,j}* represents a product of the j-th partition position change information in the position change information with the sequence number of (i+1) and the j-th partition position change information in the position change information with the sequence number of i in the second queue ... until the j-th partition position change information in the position change information with the sequence number of 0. For example, when i=n-1, *C_{n-i,j}* is equal to the product of *H*_{*n*-1,*j*} and *H*_{*n-*2*,j*} ... until *H*₀*_{,j}.*

In FIG. 5, the optimized path temporary register stores a weighted average Q*_{i,j}* , and the weighted average Q*_{i,j}* is obtained by taking the weighted average of the following three: the position information of the partition adjacent to the j-th partition on the image with the sequence number of i in the image queue, the position information of the j-th partition on the frame of image adjacent to the image with the sequence number of i, and C*_{i,j}* in the original path buffer. The weighted average is expressed by *Q_{i,j}*. Whenever the weighted average is obtained, the *Q_{i,j}* is temporarily stored in the optimized path buffer, and then overlaid in the optimized path buffer, and recorded as *P_{i,j}* . Obviously, when i=n-1, *P*_{*n-*1*,j*} means that the value is obtained by the weighted average of the following three: the position information of the partition adjacent to the j-th partition on the image at the head of the first queue, the position information of the j-th partition on the preceding frame of image of the frame of image at the head of the queue, and *C*_{*n-*1*,j*} in the original path buffer.

The product result *P_{n-i,j}*^{-1 ∗} *C_{n-i,j}* is recorded as *Bⱼ* , and *Bⱼ* represents the deformation information corresponding to each partition of the image at the head of the queue. For example, when j=1, *B*₀ represents the deformation information corresponding to the first partition of the image at the head of the queue, and similarly, *B₁* represents the deformation information corresponding to the second partition of the image at the head of the queue ... and so on, if the image at the head of the queue is divided into 6 partitions, *B₅* represents the deformation information corresponding to the sixth partition of the image at the head of the queue. *B*₀, *B*₁, *B*₂, *B*₃*, B*₄, *B*₅ The information is combined to form the deformation information corresponding to the image at the head of the queue in the image buffer, referring to the deformation information corresponding to the image at the head of the queue obtained by a deformation matrix optimization iterator as shown in FIG. 6.

After the deformation information of the preceding image in the first pair of images is acquired through step S103, the deformation information may be used to perform deformation processing on the preceding image, see step S104.

In step S104, the preceding image in the m-th pair of raw images is deformed according to the deformation information corresponding to the preceding image in the m-th pair of raw images to obtain the preceding image in the m-th pair of raw images with jitter removed.

The preceding image in the first pair of images continues to be taken as an example. After the deformation information corresponding to the preceding image in the first pair of images is obtained based on the step illustrated in step S103, when the deformation information is represented by a deformation matrix, the partition of the preceding image is deformed according to the deformation matrix corresponding to the preceding image in the first pair of raw images, that is, the position information of the image is adjusted by using the deformation information obtained in step S103. For example, the deformation matrix of the third partition of the image at the head of the queue in FIG. 6 contains the position information of the feature point P, and there are some differences between the position information of the feature point P existing in the deformation matrix and the position information of the feature point P on the third partition of the image at the head of the queue. In order to eliminate the position difference, the point P on the image at the head of the queue is adjusted to coincide with the position of the feature point P in the deformation information of the third partition, and the position difference can be eliminated. Similarly, the positions of the feature points of other partitions on the image at the head of the queue should also be adjusted to the positions of the corresponding feature points in the deformation information, so that the adjusted image shown in FIG. 6 can be obtained. After the position information of the image at the head of the queue is adjusted, the image outside the deformation information is cropped, and the effect of eliminating the position difference can be achieved.

The technical solution for removing video jitter proposed in the present application first determines the position information of the feature point pairs in each pair of raw images according to the position information of the feature point pairs in each pair of compressed images. The raw images will become smaller after compression, and the electronic device will perform various processing relatively quickly, so this technical means can acquire the position information of each feature point pair on the image in real time for each image captured. After the position information of the feature point pairs on each image is acquired in real time, the position change information of the subsequent image relative to the preceding image in each pair of raw images is determined in real time correspondingly according to the position information of the feature point pairs in each pair of raw images. After the position change information of the subsequent image relative to the preceding image in the n pairs of raw images is acquired, deformation information corresponding to the preceding image in the first pair of raw images is acquired, and the preceding image is deformed according to the deformation information corresponding to the preceding image in the first pair of raw images to obtain the preceding image with jitter removed. By analogy, other images after the preceding image are sequentially deformed and jitter-removed, thereby achieving real-time jitter removing. At the same time, this technical solution does not rely on other auxiliary devices while removing jitter in real time, and has greater convenience, so that the technical problem that real-time jitter removing cannot be achieved or external gyros are needed for real-time jitter removing in the prior art is solved.

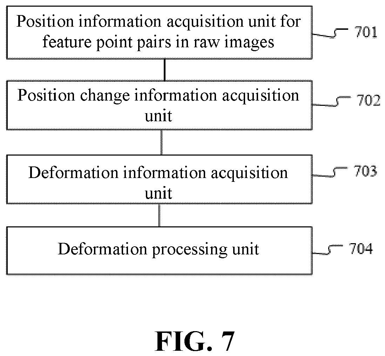

The present application further provides an apparatus for removing video jitter. FIG. 7 is a schematic structural diagram of an embodiment of the apparatus for removing video jitter provided by the present application. Since the apparatus embodiment corresponds to the method embodiment shown in FIG. 1, the description is relatively simple. For related parts, please refer to the corresponding description of the method embodiment provided above. The apparatus may be specifically applied to various electronic devices. The apparatus embodiment described below is only illustrative.

The apparatus for removing video jitter shown in FIG. 7 includes: position information acquisition first unit 701, configured to determine position information of feature point pairs in each pair of raw images according to position information of feature point pairs in each pair of compressed images, wherein one feature point pair is composed of two corresponding feature points on two consecutive images in each pair of images, and the raw images are uncompressed images; position change information acquisition unit 702, configured to determine position change information of the subsequent image relative to the preceding image in each pair of raw images according to the position information of the feature point pairs in each pair of raw images; deformation information acquisition unit 703, configured to acquire deformation information corresponding to the preceding image in the m-th pair of raw images according to the position change information of the subsequent image relative to the preceding image in n pairs of raw images, where n and m are positive integers, and m is not greater than n; and deformation processing unit 704, configured to deform the preceding image in the m-th pair of raw images according to the deformation information corresponding to the preceding image in the m-th pair of raw images to obtain the preceding image in the m-th pair of raw images with jitter removed.

Optionally, the apparatus further includes: an image storage unit, configured to store the raw images into a first queue; and a position change information storage unit, configured to store the position change information of the subsequent image relative to the preceding image in each pair of raw images into a second queue.

Optionally, the apparatus further includes: a compression unit, configured to compress each pair of raw images by a first multiple; a feature point determination unit, configured to determine feature points on each image in each pair of compressed images; a feature point pair determination unit, configured to determine two corresponding feature points on the two consecutive images in each pair of compressed images as a feature point pair; and a position information acquisition second unit, configured to determine position information of the feature point pairs in each pair of compressed images.

Optionally, position change information acquisition unit 702 includes: an image partitioning subunit, configured to partition consecutive images in each pair of raw images; a position change information acquisition first subunit, configured to determine position change information of a corresponding partition of the subsequent image relative to a corresponding partition of the preceding image in each pair of raw images according to the position information of the feature point pairs in the corresponding partition of each pair of raw images; and a position change information acquisition second subunit, configured to determine the position change information of the subsequent image relative to the preceding image in each pair of raw images according to the position change information of the corresponding partition of the subsequent image relative to the corresponding partition of the preceding image in each pair of raw images.

Optionally, deformation processing unit 704 includes: a deformation subunit, configured to deform the partition of the preceding image in the m-th pair of raw images according to a deformation matrix corresponding to the preceding image in the m-th pair of raw images; and a cutting subunit, configured to cut an edge of the preceding image in the m-th pair of raw images after deformation.

The present application further provides an embodiment of an electronic device for removing video jitter. The electronic device in the embodiment includes: a processor; and a memory for storing a program for removing video jitter, and when the program is read and executed by the processor, the following operations are performed: determining position information of feature point pairs in each pair of raw images according to position information of feature point pairs in each pair of compressed images, wherein one feature point pair is composed of two corresponding feature points on two consecutive images in each pair of images, and the raw images are uncompressed images; determining position change information of the subsequent image relative to the preceding image in each pair of raw images according to the position information of the feature point pairs in each pair of raw images; acquiring deformation information corresponding to the preceding image in the m-th pair of raw images according to the position change information of the subsequent image relative to the preceding image in n pairs of raw images, where n and m are positive integers, and m is not greater than n; and deforming the preceding image in the m-th pair of raw images according to the deformation information corresponding to the preceding image in the m-th pair of raw images to obtain the preceding image in the m-th pair of raw images with jitter removed. For related technical features, please refer to the method embodiment, which will not be repeated here.

The present application further proposes a computer-readable storage medium. Since the computer-readable storage medium embodiment is basically similar to the method embodiment, the description is relatively simple. For related parts, please refer to the corresponding description of the method embodiment provided above. The computer-readable storage medium embodiment described below is only illustrative.

The present application further provides a computer-readable medium. The computer-readable medium may be included in the apparatus described in the above-mentioned embodiment; or it may exist alone without being assembled into the apparatus. The above computer-readable medium carries one or more programs. When executed by the apparatus, the above one or more programs cause the apparatus to: determine position information of feature point pairs in each pair of raw images according to position information of feature point pairs in each pair of compressed images, wherein one feature point pair is composed of two corresponding feature points on two consecutive images in each pair of images, and the raw images are uncompressed images; determine position change information of the subsequent image relative to the preceding image in each pair of raw images according to the position information of the feature point pairs in each pair of raw images; acquire deformation information corresponding to the preceding image in the m-th pair of raw images according to the position change information of the subsequent image relative to the preceding image in n pairs of raw images, where n and m are positive integers, and m is not greater than n; and deform the preceding image in the m-th pair of raw images according to the deformation information corresponding to the preceding image in the m-th pair of raw images to obtain the preceding image in the m-th pair of raw images with jitter removed. For related technical features, please refer to the method embodiment, which will not be repeated here.

Although the present application is disclosed as above with preferred embodiments, it is not intended to limit the present application. Any person skilled in the art can make possible changes and modifications without departing from the spirit and scope of the present application.

In a typical configuration, a computing device includes one or more central processing units (CPUs), an input/output interface, a network interface, and a memory.

The memory can include a volatile memory, a Random Access Memory (RAM), and/or a nonvolatile memory in computer-readable media, e.g., a Read-Only Memory (ROM) or a flash RAM The memory is an example of the computer-readable medium.
1. The computer-readable medium, including permanent and non-permanent, removable and non-removable media, can implement information storage by means of any method or technology. The information may be computer-readable instructions, data structures, program modules, or other data. Examples of computer storage media include, but are not limited to, a phase change memory (PRAM), a static random access memory (SRAM), a dynamic random access memory (DRAM), other types of random access memories (RAM), read-only memories (ROM), electrically erasable programmable read-only memories (EEPROM), flash memories or other memory technologies, read-only compact disc read-only memories (CD-ROM), digital versatile disks (DVD) or other optical storage, magnetic tape cassettes, magnetic tape magnetic disk storage or other magnetic storage devices, or any other non-transmission media, and the computer storage media can be used to store information that can be accessed by computing devices. As defined herein, the computer-readable medium does not include non-temporary computer-readable media (transitory media), such as a modulated data signal and a carrier.
2. Those skilled in the art should understand that the embodiments of the present application can be provided as a method, a system, or a computer program product. Therefore, the present application may be in the form of a complete hardware embodiment, a complete software embodiment, or an embodiment combining software and hardware. Moreover, the present application can be in the form of a computer program product implemented on one or more computer-usable storage media (including, but not limited to, a magnetic disk memory, a CD-ROM, an optical memory, and the like) including computer-usable program code.

## Claims

1. A method for removing video jitter, comprising:
determining position information of feature point pairs in each pair of raw images according to position information of feature point pairs in each pair of compressed images, wherein one feature point pair is composed of two corresponding feature points on two consecutive images in each pair of images, and the raw images are uncompressed images;
determining position change information of the subsequent image relative to the preceding image in each pair of raw images according to the position information of the feature point pairs in each pair of raw images;
acquiring deformation information corresponding to the preceding image in the m-th pair of raw images according to the position change information of the subsequent image relative to the preceding image in n pairs of raw images, where n and m are positive integers, and m is not greater than n; and
deforming the preceding image in the m-th pair of raw images according to the deformation information corresponding to the preceding image in the m-th pair of raw images to obtain the preceding image in the m-th pair of raw images with jitter removed.

2. The method according to claim 1, further comprising: storing the raw images into a first queue; and
storing the position change information of the subsequent image relative to the preceding image in each pair of raw images into a second queue.

3. The method according to claim 2, wherein the step of acquiring the deformation information corresponding to the preceding image in the m-th pair of raw images according to the position change information of the subsequent image relative to the preceding image in the n pairs of raw images comprises:
acquiring the deformation information corresponding to the preceding image in the m-th pair of raw images according to the position change information of the subsequent image relative to the preceding image in the n pairs of raw images when the images stored in the first queue reach a first number and when the position change information stored in the second queue reaches the first number.

4. The method according to claim 3, wherein after the step of acquiring the deformation information corresponding to the preceding image in the first pair of raw images, the method further comprises:
taking out the image at the head of the first queue before storing images into the first queue again; and
taking out the position change information at the head of the second queue before storing position change information into the second queue again.

5. The method according to claim 1, further comprising:
compressing each pair of raw images by a first multiple;
determining feature points on each image in each pair of compressed images;
determining two corresponding feature points on the two consecutive images in each pair of compressed images as a feature point pair; and
determining position information of the feature point pairs in each pair of compressed images.

6. The method according to claim 5, wherein the step of determining the position information of the feature point pairs in each pair of raw images according to the position information of the feature point pairs in each pair of compressed images comprises:
expanding the position information of the feature point pairs in each pair of compressed images by the first multiple to obtain the position information of the feature point pairs in each pair of raw images.

7. The method according to claim 3, wherein the step of determining the position information of the feature point pairs in each pair of raw images according to the position information of the feature point pairs in each pair of compressed images comprises:
partitioning the two consecutive images in each pair of raw images;
determining position change information of a corresponding partition of the subsequent image relative to a corresponding partition of the preceding image in each pair of raw images according to the position information of the feature point pairs in the corresponding partition of each pair of raw images; and
determining the position change information of the subsequent image relative to the preceding image in each pair of raw images according to the position change information of the corresponding partition of the subsequent image relative to the corresponding partition of the preceding image in each pair of raw images.

8. The method according to claim 7, wherein the position information is coordinates, the position change information is a transformation matrix, and the deformation information is a deformation matrix.

9. The method according to claim 8, wherein the step of deforming the preceding image in the m-th pair of raw images according to the deformation information corresponding to the preceding image in the m-th pair of raw images comprises:
deforming the partition of the preceding image in the m-th pair of raw images according to the deformation matrix corresponding to the preceding image in the m-th pair of raw images; and
cutting an edge of the preceding image in the m-th pair of raw images after deformation.

10. An apparatus for removing video jitter, comprising:
a position information acquisition first unit, configured to determine position information of feature point pairs in each pair of raw images according to position information of feature point pairs in each pair of compressed images, wherein one feature point pair is composed of two corresponding feature points on two consecutive images in each pair of images, and the raw images are uncompressed images;
a position change information acquisition unit, configured to determine position change information of the subsequent image relative to the preceding image in each pair of raw images according to the position information of the feature point pairs in each pair of raw images;
a deformation information acquisition unit, configured to acquire deformation information corresponding to the preceding image in the m-th pair of raw images according to the position change information of the subsequent image relative to the preceding image in n pairs of raw images, where n and m are positive integers, and m is not greater than n; and
a deformation processing unit, configured to deform the preceding image in the m-th pair of raw images according to the deformation information corresponding to the preceding image in the m-th pair of raw images to obtain the preceding image in the m-th pair of raw images with jitter removed.

11. The apparatus according to claim 10, further comprising:
an image storage unit, configured to store the raw images into a first queue; and
a position change information storage unit, configured to store the position change information of the subsequent image relative to the preceding image in each pair of raw images into a second queue.

12. The apparatus according to claim 10, further comprising:
a compression unit, configured to compress each pair of raw images by a first multiple;
a feature point determination unit, configured to determine feature points on each image in each pair of compressed images;
a feature point pair determination unit, configured to determine two corresponding feature points on the two consecutive images in each pair of compressed images as a feature point pair; and
a position information acquisition second unit, configured to determine position information of the feature point pairs in each pair of compressed images.

13. The apparatus according to claim 10, wherein the position change information acquisition unit comprises:
an image partitioning subunit, configured to partition consecutive images in each pair of raw images;
a position change information acquisition first subunit, configured to determine position change information of a corresponding partition of the subsequent image relative to a corresponding partition of the preceding image in each pair of raw images according to the position information of the feature point pairs in the corresponding partition of each pair of raw images; and
a position change information acquisition second subunit, configured to determine the position change information of the subsequent image relative to the preceding image in each pair of raw images according to the position change information of the corresponding partition of the subsequent image relative to the corresponding partition of the preceding image in each pair of raw images.

14. The apparatus according to claim 10, wherein the deformation processing unit comprises:
a deformation subunit, configured to deform the partition of the preceding image in the m-th pair of raw images according to a deformation matrix corresponding to the preceding image in the m-th pair of raw images; and
a cutting subunit, configured to cut an edge of the preceding image in the m-th pair of raw images after deformation.

15. An electronic device, comprising:
a processor; and
a memory, for storing a program for removing video jitter, wherein when the program is read and executed by the processor, the following operations are performed:
determining position information of feature point pairs in each pair of raw images according to position information of feature point pairs in each pair of compressed images, wherein one feature point pair is composed of two corresponding feature points on two consecutive images in each pair of images, and the raw images are uncompressed images;
determining position change information of the subsequent image relative to the preceding image in each pair of raw images according to the position information of the feature point pairs in each pair of raw images;
acquiring deformation information corresponding to the preceding image in the m-th pair of raw images according to the position change information of the subsequent image relative to the preceding image in n pairs of raw images, where n and m are positive integers, and m is not greater than n; and
deforming the preceding image in the m-th pair of raw images according to the deformation information corresponding to the preceding image in the m-th pair of raw images to obtain the preceding image in the m-th pair of raw images with jitter removed.

16. A computer-readable storage medium on which a program for removing video jitter is stored, wherein when the program is read and executed by a processor, the following operations are performed:
determining position information of feature point pairs in each pair of raw images according to position information of feature point pairs in each pair of compressed images, wherein one feature point pair is composed of two corresponding feature points on two consecutive images in each pair of images, and the raw images are uncompressed images;
determining position change information of the subsequent image relative to the preceding image in each pair of raw images according to the position information of the feature point pairs in each pair of raw images;
acquiring deformation information corresponding to the preceding image in the m-th pair of raw images according to the position change information of the subsequent image relative to the preceding image in n pairs of raw images, where n and m are positive integers, and m is not greater than n; and
deforming the preceding image in the m-th pair of raw images according to the deformation information corresponding to the preceding image in the m-th pair of raw images to obtain the preceding image in the m-th pair of raw images with jitter removed.
